# EUROPÄISCHE PATENTSCHRIFT

(11) **EP 0 544 848 B1**
(45) Veröffentlichungstag und Bekanntmachung des Hinweises auf die Patenterteilung: **25.01.1995**
(21) Anmeldenummer: 92909292.2
(22) Anmeldetag: 02.05.1992
(51) Int. Cl.: B60T 8/18, F16J 3/04

(54) **LASTABHÄNGIGER TWIN-BREMSKRAFTREGLER**
LOAD-DEPENDENT TWIN BRAKING POWER REGULATOR
REGULATEUR DE PUISSANCE DE FREINAGE TWIN ASSERVI A LA CHARGE

(30) Priorität: 20.06.1991 DE 4120358
(43) Veröffentlichungstag der Anmeldung: 09.06.1993
(73) Patentinhaber: ITT Automotive Europe GmbH, 60488 Frankfurt (DE)
(72) Erfinder: SAALBACH, Kurt, D-6082 Mörfelden (DE); CEZANNE, Rudolf, D-6394 Grävenwiesbach 5 (DE); FÜLLER, Dieter, D-6090 Rüsselsheim (DE)
(86) Internationale Anmeldenummer: EP9200955
(87) Internationale Veröffentlichungsnummer: WO9300237

(56) Entgegenhaltungen:
- EP-A- 0 299 850
- DE-A- 3 315 763
- US-A- 4 101 176

## Beschreibung

Die Erfindung betrifft einen lastabhängigen Twin-Bremskraftregler gemäß dem Oberbegriff des Anspruches 1.

Ein gattungsgemäßer Twin-Bremskraftregler ist aus der DE-PS 33 15 763 bekannt. Dieser besitzt zur Ansteuerung der Regelkolben ein Wippelement, das rotationssymmetrisch ausgebildet ist. Die belasteten Enden der Regelkolben, das Wippelement und ein Teil eines am lastabhängig beweglichen Hebel befestigten Steuerstößels sind in einem zylindrischen Raum angeordnet, der spanabhebend in das Gehäuse gefräst ist. Um den Raum herum ist am Gehäuserand ein Schutzkappensitz eingefräst, um den eine rollmembranartige Schutzkappe eingespannt ist, die den zylindrischen Raum stirnseitig begrenzt. Durch ein zentrales Loch in der Schutzkappe führt der Steuerstößel von außen in diesen Raum. Am Steuerstößel umgreift die Schutzkappe einen umlaufenden Wulst.

Die Verwendung von Wippelementen - welcher Form auch immer - hat sich bewährt bei der lastabhängigen Ansteuerung von Twin-Reglern. Damit die in den druckmittelfreien Raum ragenden Regelkolbenenden und ihre Dichtungen vor Verschmutzung geschützt sind, ist eine flexible, am Gehäuse befestigte Schutzkappe unentbehrlich. Das Gehäuse wird kostengünstig von einem Strang geschnitten, der im Gehäuseprofil gepreßt ist. Der zylindrische Raum jedoch muß genau wie der Schutzkappensitz nachträglich spanabhebend hergestellt werden. Das hat zur Folge, daß viel Material verschwendet wird und ein großer Arbeitsaufwand nötig ist.

Die vorliegende Erfindung hat zur Aufgabe, einen gattungsgemäßen Bremskraftregler zu schaffen, bei dem wenig Abfallmetall und Arbeitszeit bei der Herstellung des Gehäuses anfallen.

Diese Aufgabe wird gelöst durch die kennzeichnenden Merkmale des Hauptanspruches.

Statt mit spanabhebenden Maßnahmen wird dem Gehäuse also gleich mit dem Strangpreßprofil die Form gegeben, die eine Befestigung der Schutzkappe erlaubt, so daß keine Nacharbeit nötig ist. Lediglich bei der Herstellung der Stufenbohrungen und der Druckmittelanschlüsse fallen noch Späne an.

Die Schutzkappe selbst wird dabei vorteilhafterweise topfartig geformt, so daß ihr Rauminhalt das Volumen des zylindrischen Raums ersetzt.

Weitere vorteilhafte Merkmale ergeben sich aus der folgenden Beschreibung einer bevorzugten Ausführung anhand von zwei Zeichnungen.

Es zeigen:
- Fig. 1: einen Schnitt durch einen erfindungsgemäßen Bremskraftregler;
- Fig. 2: die Draufsicht auf eine Schutzkappe mit Blechring.

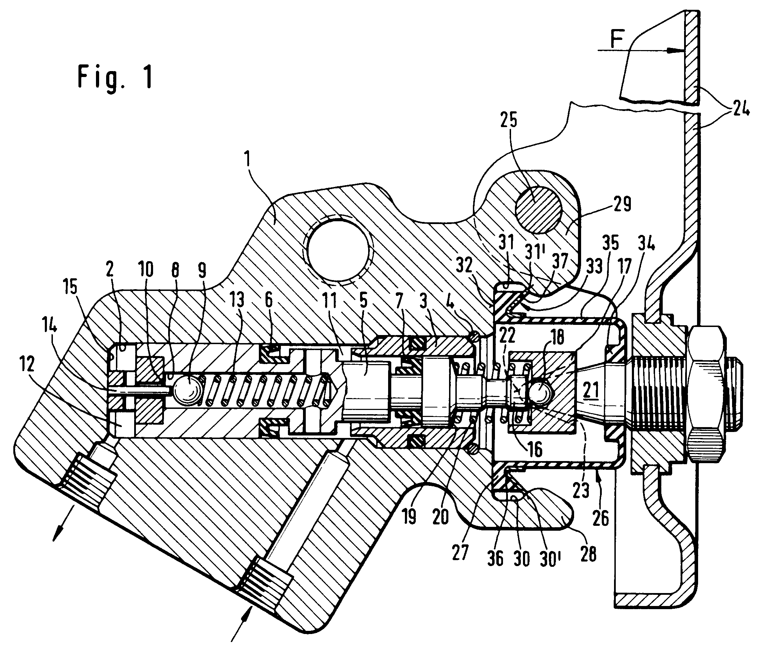

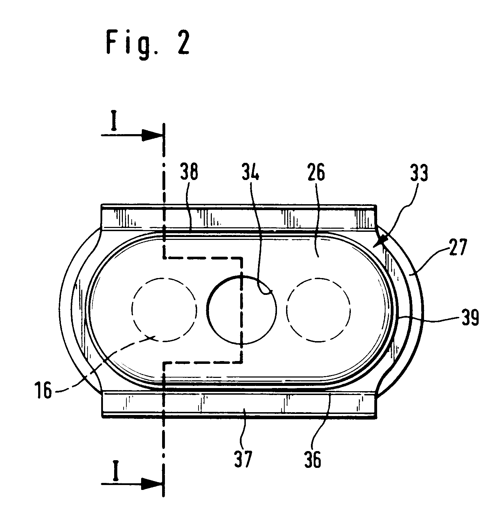

Der in Fig. 1 dargestellte Bremskraftregler ist im Schnitt durch eine Regeleinheit dargestellt. Eine zweite identische Regeleinheit befindet sich - nicht sichtbar - parallel angeordnet hinter der ersten. Im Bereich der Ansteuerungsvorrichtung ist die Schnittebene in die Symmetrieachse versetzt, wie in Fig. 2 durch eine gestrichelte Linie angedeutet ist.

Der Bremskraftregler besitzt im Gehäuse 1 die Bohrung 2, in welcher mit Hilfe der Führungshülse 3 und des Sprengrings 4 der Stufenkolben 5 axial verschiebbar geführt ist. Der Stufenkolben 5 ist gegen die Wand der Bohrung 2 und die Führungshülse 3 mit den Dichtungsmanschetten 6 bzw. 7 abgedichtet. Er besitzt eine Axialbohrung 8, in welcher sich das Ventilschließglied 9 befindet, das mit dem Ventilsitz 10 zusammen als Regelventil zwischen Einlaßraum 11 und Auslaßraum 12 wirkt. Dazu ist das Ventilschließglied 9 von der Druckfeder 13 in Schließrichtung belastet und im dargestellten drucklosen Zustand durch den Stößel 14, der sich an der die Gehäusebohrung 2 begrenzenden Stirnwand 15 abstützt, von seinem Ventilsitz 10 abgehoben.

Das dieser Stirnwand 15 abgewandte Ende 16 des Stufenkolbens 5 ragt aus der Gehäusebohrung 2 heraus in den druckmittelfreien Raum. Gemeinsam mit dem nicht gezeichneten Ende des zweiten Stufenkolbens wird er vom Wippelement 17 über die darin eingepaßte Kugel 18 in Öffnungsrichtung des Ventils 9, 10 beaufschlagt. Zur Stabilisierung der Lage des Wippelementes 17 ist zwischen ihm und dem Absatz 19 am Stufenkolben 5 die Druckfeder 20 angeordnet. Der Angriffspunkt 22 des Stößels 21 am Wippelement 17 liegt in der Mitte zwischen den beiden Regeleinheiten und zwar dichter am Gehäuse 1 als der Berührungspunkt der Kugel 18 mit dem Stufenkolbenende 16. Der Stößel 21 besitzt die Form eines Spitzkegels mit abgerunderter Spitze, desgleichen die Vertiefung 23, in welcher sich der Angriffspunkt 22 befindet. Allerdings ist der Öffnungswinkel der Vertiefung 23 größer als der des Stößels 21, so daß eine begrenzte Wippbewegung möglich ist. Der Stößel 21 ist mit dem Steuerhebel 24 verschraubt, welcher um das Gelenk 25 schwenkbar ist und von der lastabhängigen Kraft F beaufschlagt ist.

An der Gehäusefläche 32 einerseits und am Stößel 21 andererseits liegt staubdicht die Schutzkappe 26 an. Sie ist aus flexiblem Material, beispielsweise Gummi, und mit der Hebelbewegung verformbar. Sie ist topfartig geformt und besitzt einen an der Gehäusefläche 32 anliegenden, tellerartigen umlaufenden Rand 27, der nach außen hin dicker wird. Der den Stößel 21 umgreifende Schutzkappenrand 34 ist zur Vermeidung von Verschleiß verstärkt und dem Stößelumfang angepaßt.

Zur Befestigung der Schutzkappe 26 besitzen die zwei mit dem Gehäuse 1 im Strang gepreßten Gehäusefortsätze 28 und 29, die die Gehäusefläche 32 begrenzen, im Profil jeweils eine breite Nut 30 bzw. 31. Die Nuten 30 und 31 verlaufen quer zur Kolbenachse, parallel zu der Ebene, in der die Stufenkolben angeordnet sind, und befinden sich an den Gehäusefortsätzen 28 und 29 jeweils an der Seite, die dem Wippelement 17 zugewandt ist.

Die Schutzkappe 26 ist mit dem gestanzten Blechring 33 an der Gehäusefläche 32 fixiert. Der Blechring 33 besitzt an seinen den Gehäusefortsätzen 28 und 29 zugewandten Längsseiten einen spitzwinklig nach außen umgebogenen Rand 37, während er mit seinem inneren Umfang flächig an die Wand 35 der Schutzkappe angepaßt ist, so daß sein Profil die Längsseiten entlang V-förmig ist.

Die Befestigung der Schutzkappe 26 erfolgt, in dem der Blechring 33 mit der geknickten Kante 36 voran über die Schutzkappe 26 geführt wird und gegen das Gehäuse 1 gedrückt wird, bis der nach außen umgebogene Rand 37 in die Nuten 33 und 31 einschnappt. Die Nutbreite entspricht daher in etwa der Summe aus der Dicke des Tellerrandes 27 der Schutzkappe 26 und der axialen Abmessung des umgebogenen Randes 37 des Blechrings 33. Im eingebauten Zustand drückt der Blechring 33 die Schutzkappe staubdicht an die Gehäusefläche 32, in dem er sich an den Wänden 30' und 31' der Nuten 30 und 31 abstützt. Durch die Abschrägung der Nutwände 30' und 31' ist ein Toleranzausgleich bei variierender Dicke des Tellerrandes 27 möglich, indem der umgeknickte Rand 37 des Blechrings 33 mehr oder weniger tief einschert.

Die in Fig. 2 dargestellte Draufsicht auf die Schutzkappe 26 mit dem Blechring 33 macht die Form der beiden Teile deutlich. In gestrichelten Linien sind zum einen die Schnittlinie von Fig. 1 und zum anderen die Positionen des Stufenkolbenendes 16 und seines Gegenstücks angedeutet. Der Grundriß von Schutzkappe 26 und Blechring 33 entspricht zwei mit geraden Linien verbundenen Halbkreisen. In den geradlinigen Bereichen 38 ist der Rand 37 spitzwinklig zum Betrachter hin umgebogen, in den Rundungen 39 liegt er flach am Schutzkappenrand an.

### Bezugszeichenliste

- 1: Gehäuse
- 2: Gehäusebohrung
- 3: Führungshülse
- 4: Sprengring
- 5: Stufenkolben
- 6: Dichtungsmanschette
- 7: Dichtungsmanschette
- 8: Axialbohrung
- 9: Ventilschließglied
- 10: Ventilsitz
- 11: Einlaßraum
- 12: Auslaßraum
- 13: Druckfeder
- 14: Ventilstößel
- 15: Stirnwand
- 16: Stufenkolbenende
- 17: Wippelement
- 18: Kugel
- 19: Absatz
- 20: Druckfeder
- 21: Stößel
- 22: Angriffspunkt
- 23: Vertiefung
- 24: Steuerhebel
- 25: Gelenk
- 26: Schutzkappe
- 27: Tellerrand
- 28: Gehäusefortsatz
- 29: Gehäusefortsatz
- 30: Nut
- 30': Nutwand
- 31: Nut
- 31': Nutwand
- 32: Gehäusefläche
- 33: Blechring
- 34: Schutzkappenrand
- 35: Schutzkappenwand
- 36: geknickte Kante
- 37: Rand
- 38: geradliniger Bereich
- 39: Rundung

## Patentansprüche

1. Lastabhängiger Twin-Bremskraftregler für eine druckmittelbetätigte Bremsanlage, der in einem aus einem gepreßten Strang hergestellten Gehäuse (1) zwei nebeneinander angeordnete Bohrungen (2) mit je einem abgedichtet aus der Bohrung (2) ragenden Stufenkolben (5) aufweist, wobei die herausragenden Enden (16) der Stufenkolben von je einer Seite eines Wippelementes (17) belastet werden, das in seiner Mitte von einem Stößel (21) beaufschlagt wird, der fest mit einem lastabhängig beweglichen Steuerhebel (24) verbunden ist, wobei der Bremskraftregler außerdem eine flexible Schutzkappe (26) besitzt, die einen Bereich vor Schmutz schützt, in welchem die herausragenden Enden (16) des Stufenkolbens, das Wippelement (17) und zumindest ein Teil des Stößels (21) angeordnet sind, dadurch **gekennzeichnet**, daß das Gehäuse (1) an der Seite, auf welcher die Stufenkolben (5) herausragen, zwei Fortsätze (28,29) mit je einer geradlinigen Nut (30,31) aufweist, daß die Nuten (30,31) gleich breit und gleich tief sind parallel zur Verbindungslinie der beiden Stufenkolbenenden (16) verlaufen und sich in zwei zueinander gewandten Flächen der Fortsätze (28,29) befinden, wobei die Fortsätze (28,29) samt Nuten (30,31) im Strangpreßprofil enthalten sind.

2. Twin-Bremskraftregler nach Anspruch 1, dadurch **gekennzeichnet**, daß die Schutzkappe (26) topfartig gestaltet ist und einen tellerartigen Rand (27) sowie im Boden ein zentrales Loch (34) besitzt.

3. Twin-Bremskraftregler nach Anspruch 2, dadurch **gekennzeichnet**, daß der Grundriß der Schutzkappe (26) die Form zweier durch gleichlange gerade Linien verbundener Halbkreise besitzt, wobei der Abstand der geraden Linien (38) voneinander am Ansatz des Tellerrandes (27) kleiner ist, als der kleinste Abstand der Gehäusefortsätze (28,29) und wobei der Durchmesser des Lochs im Boden dem des Stößels (21) angepaßt ist.

4. Twin-Bremskraftregler nach Anspruch 2 oder Anspruch 3, dadurch **gekennzeichnet**, daß der Rand (34) des zentralen Lochs und/oder nach außen hin der Tellerrand (27) verdickt sind.

5. Twin-Bremskraftregler nach Anspruch 2, 3 oder 4, dadurch **gekennzeichnet**, daß zur Befestigung der Schutzkappe (26) ein elastisch verformbarer Blechring (33) vorgesehen ist, dessen Innenform in Grundriß und axialer Neigung der Außenform der Topfwand (35) angepaßt ist und dessen Profil zumindest über einen Teil seines Umfangs dadurch V-förmig ist, daß ein Rand (37) spitzwinklig nach außen umgeknickt ist (36).

6. Twin-Bremskraftregler nach Anspruch 5, dadurch **gekennzeichnet**, daß der umgeknickte Rand (37) sich zumindest über einen Teil der geradlinigen Bereiche (38) des Ringumfanges erstreckt und der Abstand der gegenüberliegenden Außenkanten des Blechrings (33) in diesen Bereichen (38) größer ist als der kleinste Abstand der Gehäusefortsätze (28,29) und kleiner als der Abstand der tiefsten Stellen der Nuten (30,31) voneinander und daß die axiale Abmessung zwischen der geknickten Kante (36) und der Außenkante des Blechringes (33) nicht größer ist als die Breite der Nuten (30,31) abzüglich der kleinsten Dicke des Tellerrandes (27).

7. Twin-Bremskraftregler nach Anspruch 6, dadurch **gekennzeichnet**, daß im eingebauten Zustand der Tellerrand (27) der Schutzkappe (26) zwischen den Gehäusefortsätzen (28,29) flächig am Gehäuse (1) anliegt, daß der Blechring mit seiner geknickten Kante (36) den Tellerrand (27) ans Gehäuse (1) drückt, in dem er sich mit der Außenkante seines V-Profils an den Wänden (30',31') der Nuten (30,31) abstützt und daß durch das zentrale Loch der Schutzkappe der Stößel (21) geführt ist.

8. Twin-Bremskraftregler nach Anspruch 7, dadurch **gekennzeichnet**, daß die Wände (30',31') der Nuten (30,31) zum Toleranzausgleich abgeschrägt sind.

9. Verfahren zum Zusammenbau eines Twin-Bremskraftreglers nach Anspruch 7 oder 8, dadurch **gekennzeichnet**, daß der Blechring (33) auf die Schutzkappe (26) gesetzt wird und diese Anordnung zwischen den Gehäusefortsätzen (28,29) gegen das Gehäuse (1) gedrückt wird, bis der Blechring (33) in die Nuten (30,31) einrastet.

## Claims

1. A load-sensitive twin brake power controller for a hydraulic pressure fluid-actuated brake system which, within an extruded housing (1), is furnished with two bores (2) disposed beside each other with one stepped piston (5) sealedly projecting out of each bore (2), the projecting ends (16) of the stepped pistons being loaded by one side each of a rocking element (17) which, in its centre, is acted upon by a tappet (21) being rigidly coupled to a load-sensitively movable control lever (24), the brake power controller being furthermore provided with a flexible dust cover (26) which protects a range against dust, wherein the projecting ends (16) of the stepped piston, the rocking element (17) and at least part of the tappet (21) are positioned,
**characterized** in that, at the side where the stepped pistons (5) project, the housing (1) is formed with two projections (28, 29) with one each straight groove (30, 31), in that the grooves (30, 31) have equal width and equal depth, extend parallel to the connecting line of the two stepped piston ends (16) and are positioned in two facing surfaces of the projections (28, 29), the projections (28, 29) together with the grooves (30, 31) being comprised in the extruded section.

2. A twin brake power controller as claimed in claim 1,
**characterized** in that the dust cover (26) has a cup-type configuration and is furnished with a dish-type edge (27) and, in its bottom, with a central hole.

3. A twin brake power controller as claimed in claim 2,
**characterized** in that the dust cover (26) has a horizontal projection having the shape of two semicircles which are interconnected by straight lines of equal length, the distance of the straight lines (38) from each other at the shoulder of the dish-shaped edge (27) being smaller than the smallest distance of the housing projections (28, 29), and the diameter of the hole in the bottom being adapted to that of the tappet (21).

4. A twin brake power controller as claimed in claim 2 or in claim 3,
**characterized** in that the edge (34) of the central hole and/or outwardly the dish-type edge (27) are thickened.

5. A twin brake power controller as claimed in claims 2, 3 or 4,
**characterized** in that, for attaching the dust cover (26), an elastically deformable sheet metal ring (33) is provided whose inside shape, in respect of horizontal projection and axial inclination, is adapted to the outside shape of the cup wall (35), and whose profile section is V-shaped over at least part of its circumference because a rim (37) is bent over outwardly at an acute angle (36).

6. A twin brake power controller as claimed in claim 5,
**characterized** in that the bent-over rim (37) extends over at least part of the straight ranges (38) of the circumference of the ring, and in that in these ranges (38) the distance of the opposite outside edges of the sheet metal ring (33) is larger than the smallest distance of the housing projections (28, 29) from each other and smaller than the distance of the deepest points of the grooves (30, 31) from each other, and in that the axial dimension between the bent edge (36) and the outer edge of the sheet metal ring (33) is not larger than the width of the grooves (30, 31) less the smallest thickness of the dish-type edge (27).

7. A twin brake power controller as claimed in claim 6,
**characterized** in that, in the mounted condition, the dish-type edge (27) of the dust cover (26) abuts between the housing projections (28, 29) over its whole surface on the housing (1), in that with its bent edge (36) the sheet metal ring presses the dish-type edge (27) against the housing (1) by taking support with the outer edge of its V-shaped profile section at the walls (30', 31') of the grooves (30, 31), and in that the tappet (21) is guided by the central hole of the dust cover.

8. A twin brake power controller as claimed in claim 7,
**characterized** in that the walls (30', 31') of the grooves (30, 31) are sloped for the compensation of inaccuracies.

9. A process for the assembly of a twin brake power booster as claimed in claim 7 or in claim 8,
**characterized** in that the sheet metal ring (33) is put onto the dust cover (26), and in that this arrangement is pushed between the housing projections (28, 29) against the housing (1) until the sheet metal ring (33) comes to be locked in the grooves (30, 31).

## Revendications

1. Régulateur d'effort de freinage en fonction de la charge, de type jumelé, pour système de freinage à actionnement au moyen d'un agent de pression, comprenant, dans un boîtier (1) réalisé à partir d'un produit profilé moulé par pression, deux alésages (2) qui sont disposés l'un à côté de l'autre et comportent chacun un piston étagé (5) qui fait saillie d'une manière étanche hors de l'alésage (2), tandis que les extrémités (16) des pistons étagés qui font saillie sont soumises chacune à l'action d'un côté respectif d'un élément formant bascule (17) qui est soumis, en son milieu, à l'action d'un poussoir (21) qui est solidaire à demeure d'un levier de commande (24) agencé de façon à pouvoir être déplacé en fonction de la charge, le régulateur d'effort de freinage comprenant en outre un capuchon de protection (26) flexible qui protège des salissures une zone dans laquelle les extrémités (16) des pistons étagés qui font saillie, l'élément formant bascule (17) et au moins une partie du poussoir (21) sont disposés, caractérisé en ce que, du côté sur lequel les pistons étagés (5) font saillie, le boîtier (1) comporte deux parties en saillie (28, 29) présentant chacune une rainure (30, 31) rectiligne, en ce que les rainures (30, 31) ont la même largeur et la même profondeur, s'étendent parallèlement à la ligne réunissant les deux extrémités (16) des pistons étagés et sont situées sur deux surfaces des parties en salle (28, 29) qui se font face, les parties en saillie (28, 29) et leurs rainures (30, 31) étant formées dans le profilé extrudé.

2. Régulateur d'effort de freinage de type jumelé selon la revendication 1, caractérisé en ce que le capuchon de protection (26) a une forme de gobelet et comporte un bord (27) en forme de disque, ainsi qu'un trou central (34) ménagé dans son fond.

3. Régulateur d'effort de freinage de type jumelé selon la revendication 1, caractérisé en ce que le contour du capuchon de protection (26) a la forme de deux demi-cercles réunis par des lignes droites de même longueur, l'espacement séparant les lignes droites (38) l'une de l'autre à l'endroit de la partie en saillie du bord (27) en forme de disque étant inférieur au plus petit espacement séparant les parties en saillie (28, 29) du boîtier, et en ce que le diamètre du trou ménagé dans le fond est adapté à celui du poussoir (21).

4. Régulateur d'effort de freinage de type jumelé selon la revendication 2 ou la revendication 3, caractérisé en ce que le bord (34) du trou central présente une plus grande épaisseur et/ou le bord (27) en forme de disque présente une épaisseur de plus en plus grande vers l'extérieur.

5. Régulateur d'effort de freinage de type jumelé selon la revendication 2, 3 ou 4, caractérisé en ce que, pour la fixation du capuchon de protection (26), il est prévu un anneau en tôle (33) élastiquement déformable dont la forme intérieure est adaptée, en contour et en inclinaison axiale, à la forme extérieure de la paroi (35) du gobelet et dont le profil, au moins sur une partie de son contour, a une forme en V du fait qu'un bord (37) est plié (36) vers l'extérieur suivant un angle aigu.

6. Régulateur d'effort de freinage de type jumelé selon la revendication 5, caractérisé en ce que le bord plié (37) s'étend au moins sur une partie des zones rectilignes (38) du contour de l'anneau et, dans ces zones (38), l'espacement des bords extérieurs de l'anneau en tôle (33) qui se font face est supérieur au plus petit espacement des parties en saillie (28, 29) du boîtier et est inférieur à l'espacement des emplacements les plus profonds des rainures (30, 31) l'un vis-à-vis de l'autre et en ce que la dimension axiale entre l'arête pliée (36) et l'arête extérieure de l'anneau en tôle (33) n'est pas supérieure à la largeur des rainures (30, 31) diminuée de la plus petite épaisseur du bord (27) en forme de plateau.

7. Régulateur d'effort de freinage de type jumelé selon la revendication 6, caractérisé en ce qu'à l'état monté, le bord (27) en forme de disque du capuchon de protection (26) prend appui à plat sur le boîtier (1) entre les parties en saillie (28, 29) du boîtier, en ce que, par son bord plié (36), l'anneau en tôle applique le bord (27) en forme de disque contre le boîtier (1) en prenant appui, par l'arête extérieure de son profil en V, sur les parois (30', 31') des rainures (30, 31) et en ce que le poussoir (21) est guidé par le trou central du capuchon de protection.

8. Régulateur d'effort de freinage de type jumelé selon la revendication 7, caractérisé en ce que les parois (30', 31') des rainures (30, 31) ont une forme inclinée en vue d'assurer une compensation de jeu.

9. Procédé d'assemblage d'un régulateur d'effort de freinage de type jumelé selon la revendication 7 ou la revendication 8, caractérisé en ce qu'on met en place l'anneau en tôle (33) sur le capuchon de protection (26) et on applique l'ensemble contre le boîtier (1) entre les parties en salles (28, 29) du boîtier jusqu'à ce que l'anneau en tôle (33) s'enclenche dans les rainures (30, 31).
